# EUROPEAN PATENT APPLICATION

(11) **EP 2 466 427 A2**
(43) Date of publication of application: **20.06.2012**
(21) Application number: 11189150.3
(22) Date of filing: 15.11.2011
(51) Int. Cl.: G06F 3/041, C03B 23/025

(54) **Non-planar display glass for mobile device**

(30) Priority: 15.12.2010 US 968347
(71) Applicant: Sony Ericsson Mobile Communications AB, 221 88 Lund (SE)
(72) Inventor: Steijner, Magnus, 246 30 Löddeköpinge (SE)
(74) Representative: Aurell, Henrik

(57) **Abstract**

A method of manufacturing a touch screen display may include heating a substantially planar glass sheet to a working temperature. The planar glass sheet may be bent into a non-planar configuration to include a curved inside surface and a curved outside surface. The curved inside surface may be ground to form a substantially planar inside surface. A touch screen assembly may be mounted to the substantially planar inside surface.

## Description

### TECHNICAL FIELD OF THE INVENTION

The invention relates generally to displays and, more particularly, to displays for mobile devices.

### DESCRIPTION OF RELATED ART

Computer, communication and entertainment devices, such as personal computers (PCs), lap top computers, mobile phones, tablet computers, media playing devices, etc., often include a touch screen display that allow a user to interact with the device via the touch screen. Conventional touch screen displays may include so-called projected capacitive touch (PCT) screen displays, in which a touch panel is mounted or installed behind a protective glass cover or "window." For example, a touch panel comprising one or more layers of conductive transparent indium tin oxide (ITO) and a liquid crystal display (LCD) may be adhered to the back of the glass window. A processor on the device may monitor changes in the screen's electrostatic field resulting from user touches to the glass window to determine a position or positions of the touch or touches.

### SUMMARY

According to one aspect, a method of manufacturing a touch screen display may include heating a substantially planar glass sheet to a working temperature; bending the planar glass sheet into a non-planar configuration to include a curved inside surface and a curved outside surface; grinding the curved inside surface to form a substantially planar inside surface; and mounting a touch screen assembly to the substantially planar inside surface.

Additionally, the substantially planar glass sheet may have an initial thickness and bending the planar glass sheet may comprise bending the planar glass sheet by a deflection distance less than the initial thickness.

Additionally, bending the planar glass sheet may result in a curved glass sheet having a maximum height corresponding to the initial thickness plus the deflection distance.

Additionally, grinding the curved inside surface may comprise grinding the curved inside surface until the maximum height of the curved glass sheet is less than or equal to the initial thickness.

Additionally, the grinding may comprise wet grinding performed using a grinding wheel or belt.

Additionally, the method may include cooling the bent glass sheet prior to grinding.

Additionally, the method may include polishing the planar inside surface to a desired optical clarity.

Additionally, the non-planar configuration may comprise a curve in a single dimension or a curve in two dimensions.

Additionally, the non-planar configuration may comprise at least one raised portion relative to a remainder of the glass sheet.

Additionally, the bending may be performed using a vacuum mold.

Accordingly to yet another aspect, a method of forming a display glass may include bending a planar glass plate to a predetermined three dimensional (3D) configuration; grinding the bent glass plate to include a planar inside surface; polishing the ground glass plate to an optical clarity; and attaching the polished glass plate to a touch screen assembly.

Additionally, the predetermined three dimensional (3D) configuration may comprise a maximum deflection distance, and grinding the bent glass may comprise grinding the planar glass plate by an amount approximately equal to the maximum deflection distance.

Additionally, the ground glass sheet may have an overall thickness substantially equal to an initial thickness of the planar glass plate.

Additionally, the 3D configuration may comprise at least one curve in at least one dimension.

Additionally, the grinding may comprise wet grinding performed using a grinding wheel or belt.

### BRIEF DESCRIPTION OF THE DRAWINGS

Reference is made to the attached drawings, wherein elements having the same reference number designation may represent like elements throughout.

Fig. 1 is a diagram of an exemplary device in which elements and methods described herein may be implemented;

Fig. 2 is a functional block diagram of stages of a display glass manufacturing process;

Figs. 3A and 3B are schematic cross section and isometric diagrams of a display glass during the heating stage of Fig. 2 according to an exemplary implementation;

Figs. 4A and 4B are schematic cross section and isometric diagrams of the display glass of Figs. 3A and 3B during bending stage of Fig. 2 according to an exemplary implementation;

Figs. 5A and 5B are schematic cross section and isometric diagrams of the display glass of Figs. 4A and 4B during bending grinding and polishing stages of Fig. 2 according to an exemplary implementation;

Fig. 6 is an isometric diagram of an exemplary device in which elements and methods described herein may be implemented;

Fig. 7A is a schematic cross section diagram of the display glass of Figs. 3A and 3B following the bending stage of Fig. 2 according to another exemplary implementation;

Figs. 7B is a schematic cross section diagram of the display glass of Fig. 7A following the grinding and polishing stages of Fig. 2 according to another exemplary implementation; and

Fig. 8 is a flow diagram illustrating processing for creating the display glass of Figs. 5A and 5B in a manner consistent with implementations described herein.

### DETAILED DESCRIPTION

The following detailed description of the invention refers to the accompanying drawings. The same reference numbers in different drawings identify the same or similar elements. Also, the following detailed description does not limit the invention. Instead, the scope of the invention is defined by the appended claims and their equivalents.

### EXEMPLARY SYSTEM

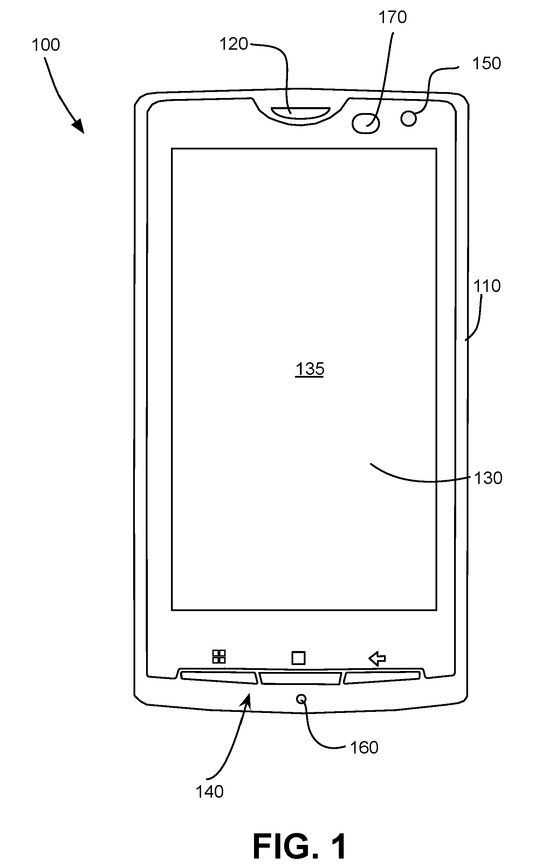

Fig. 1 is a diagram of an exemplary user device 100 in which methods and systems described herein may be implemented. In an exemplary implementation, user device 100 may be a mobile terminal. As used herein, the term "mobile terminal" may include a cellular or mobile telephone; a smart phone may combine a cellular with data processing capabilities, Internet/Intranet access, Web browser, organizer, calendar and/or a global positioning system (GPS) receiver; and a conventional laptop and/or palmtop receiver or other appliance that includes a mobile telephone transceiver. Mobile terminals may also be referred to as "pervasive computing" devices. It should also be understood that components and methods described herein may also be implemented in other devices that display information of interest and allow users to interact with the displayed information with or without including various other communication functionality. For example, user device 100 may include a personal computer (PC), a laptop computer, a personal digital assistant (PDA), a media playing device (e.g., an MPEG audio layer 3 (MP3) player, a video game playing device), a global positioning system (GPS) device, etc., that may not include various communication functionality for communicating with other devices.

Referring to Fig. 1, user device 100 may include a housing 110, a speaker 120, a display 130, control buttons 140, a sensor 150, a microphone 160, and a camera 170. Housing 110 may protect the components of user device 100 from outside elements. Speaker 120 may provide audible information to a user of user device 100.

Display 130 may provide visual information to the user. For example, display 130 may provide information regarding incoming or outgoing telephone calls, electronic mail (e-mail), instant messages, short message service (SMS) messages, etc. Display 130 may also display information regarding various applications, such as a messaging or notes application stored in user device 100, a phone book/contact list stored in user device 100, the current time, video games being played by a user, downloaded content (e.g., news or other information), songs being played by the user, etc. Consistent with implementations described herein, display 130 may be a touch screen display device that allows a user to enter commands and/or information via a finger, a stylus, a mouse, a pointing device, or some other device. For example, display 130 may be a resistive touch screen, a capacitive touch screen, an optical touch screen, an infrared touch screen, a surface acoustic wave touch screen, or any other type of touch screen device that registers an input based on a contact with the screen/display 130. In some implementations, input may be registered without a need for direct physical contact with display 130, such as across an air gap between an object and display 130

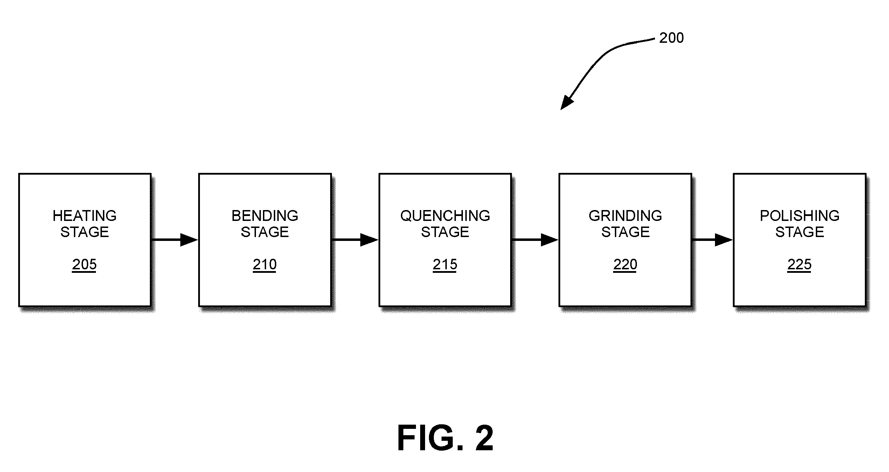

As described in detail below, a front surface of display 130 may include a non-planar outer profile (also referred to as a three dimensional (3D) profile) and a planar (e.g., flat) inner profile. For example, an outer display glass 135 associated with display 130 may be provided with an outwardly curved (e.g., convex) configuration and a flat inner configuration. In other implementations, the outer display glass may be formed into other shape configurations, such as beveled, angled, or curved configurations. In still other implementations, the outer display glass may include one or more raised portions relative to a remaining portion of the outer display glass. Providing the outer display glass with a 3D profile may increase the usability of device 100, such as enabling a reduced thickness at edge regions of device 100, etc. As described below, using the system and methodology described below in relation to Fig. 2, an inside surface of the outer display glass may be formed substantially planar or flat. This configuration enables a planar touch screen module or other components to be adhered or otherwise attached to the inside surface of display glass 135, without experiencing air gaps or other voids caused by the shape of outer display glass 135.

Control buttons 140 may permit the user to interact with user device 100 to cause user device 100 to perform one or more operations, such as place a telephone call, play various media, perform dedicated functions (e.g., back, home, etc.), etc. In an exemplary implementation, control buttons 140 may include one or more buttons that controls various applications associated with display 130.

Sensor 150 may collect and provide, to device 100, information (e.g., acoustic, infrared, etc.) that is used to aid the user in capturing images or in providing other types of information (e.g., a distance between a user and device 100). Microphone 160 may receive audible information from the user for activating applications or routines stored within user device 100. Camera 170 may enable a user to view, capture and store images (e.g., pictures, video clips) of a subject in front of device 100.

Although user device 100 shown in Fig. 1 includes a number of control buttons 140, it should be understood that user device 100 need not include such features. Rather, in some implementations, user device 100 may include touch screen display 130 alone, or in combination with fewer control buttons 140. In other implementations, device 100 may include a keypad or keyboard in addition to, or instead of control buttons 140.

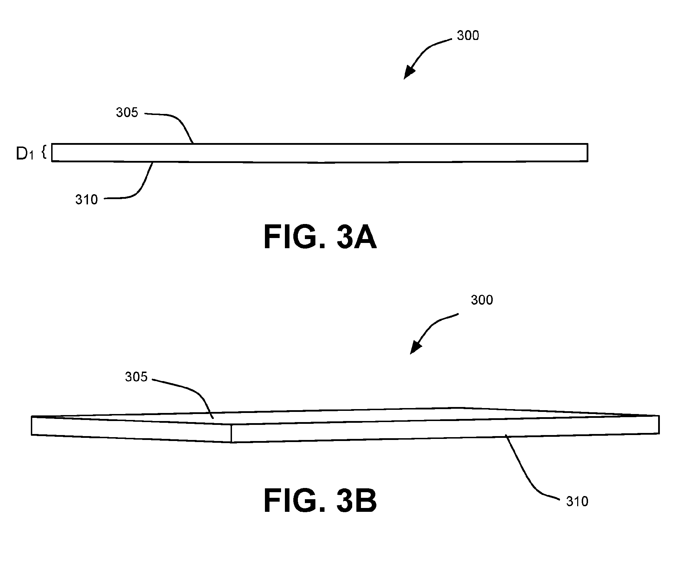

Fig. 2 is a functional block diagram of stages of a display glass manufacturing process 200. As shown, manufacturing of a display glass may include a heating stage 205, a bending stage 210, a quenching stage 215, a grinding stage 220, and a polishing stage 225. The processing incorporated within stages 205-225 is described in relation to Figs. 3A-5B. It should be understood that the stages provided in Fig. 2 are exemplary only. In practice, more or fewer stages may be used to manufacture an outer display glass component consistent with implementations described herein. For example, bending stage 210 and quenching stage 215 may be co-located into a single stage.

Figs. 3A and 3B schematically illustrate an outer display glass 135 formed as a planar sheet 300 having an outside surface 305, an inside surface 310, and an initial thickness D₁. In exemplary implementations, thickness D₁ ranges from approximately 1.0 to 2.5 millimeters. As described below, thickness D₁ is determined based on a desired curve depth or radius of curvature for display glass 135, where a larger curve depth or radius of curvature requires a correspondingly large thickness D₁. In some embodiments, glass sheet 300 may have an exemplary length of approximately 4.0 to 7.0 cm and a width may be approximately 7.5 to 13.5 cm. Furthermore, glass sheet 300 may be formed of silicabased glass also referred to as "mineral glass."

Heating stage 205 may operate to heat glass sheet 300 to a temperature suitable for shaping and bending (referred to as a working temperature for the glass). For example, heating stage 205 may include a furnace or other hearing structure for uniformly heating glass sheet 300 to a temperature between approximately 630° C to approximately 1500° C, depending on the type of glass being used. In some implementations, heating stage 205 may also include a conveyor or other transferring apparatus for transferring display glass 135 through the furnace and toward bending stage 210.

Once heating stage 205 has heated glass plate 300 to a working temperature, the initial display glass curvature may be set in bending stage 210. For example, bending stage 210 may include a vacuum or suction mold or similar structure for imparting a desired shape to glass plate 300. Such a suction mold apparatus may include one shaping surface having a number of holes formed therein. The shape of the shaping surface matches the desired outer shape of outer display glass 135. The holes in the shaping surface may communicate with one or more vacuum sources. After glass plate 300 is introduced to the bending stage 210, the vacuum sources may be activated, thereby pulling the soft glass against the shaping surface. In some instances, a lower mold may be brought into contact with a lower surface of glass plate 300 to ensure a uniform thickness in the bent glass plate.

In other implementations, a gravity mold may be used to form a desired shape/curve in glass plate 300. In such an implementation, glass plate 300 may be advanced from heating stage 205 to the gravity mold, where gravity causes glass plate 300 to conform to the shape of the mold.

Following bending stage 210, the bent or curved glass plate 300 may be advanced to quenching stage 215 where glass plate 300 is cooled, thereby preventing additional undesired bending or distortion of glass plate 300. In some implementations, quenching stage 215 may include one or more blowers for blowing air over glass plate 300. In other embodiments, other types of cooling mechanisms may be used.

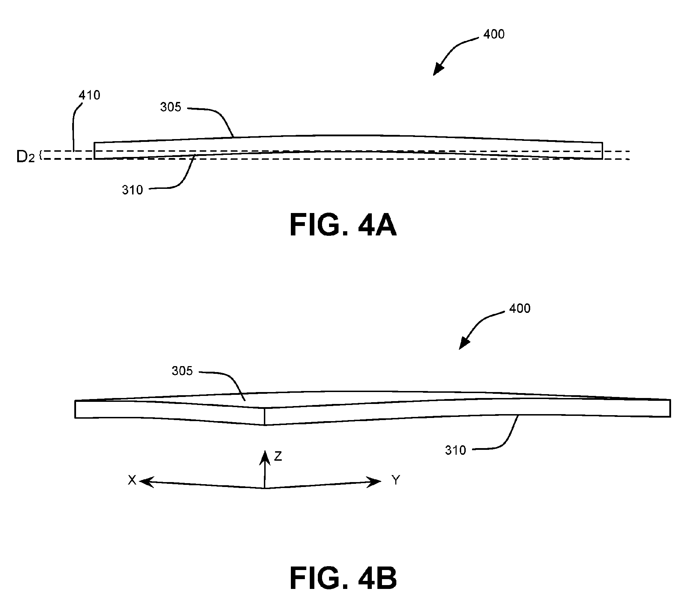

Figs. 4A and 4B are schematic cross section and isometric diagrams of the glass plate 300 of Figs. 3A and 3B following bending stage 210, hereinafter referred to as curved glass plate 400. As shown in Figs. 4A and 4B, an exemplary bend thickness of curved glass plate 400 is depicted as deflection distance D₂. That is, deflection distance D₂ represents the difference between a maximum deflection of the curved inside surface 310 of curved glass plate 400 and a minimum deflection of the curved inside surface 310. In the example depicted in Figs. 4A and 4B, the maximum deflection occurs in a region approximately centered in curved glass plate 400, however this is not required.

Consistent with implementations described herein, deflection distance D₂ may be sized such that a plane (e.g., plane 410 in Fig. 4A) extending through the region of maximum deflection does not extend through outside surface 305 of curved glass plate 400. Put another way, the amount of maximum deflection D₂ should not exceed the initial thickness of glass plate D₁. In the manner described below, this configuration allows a planar surface to be formed on inside surface 310 of curved glass plate 400 without affecting the overall dimensions or configuration of outside surface 305. Furthermore, as shown in Fig. 4A, the overall (e.g., maximum) thickness or height of curved glass plate 400 may be represented by initial thickness D₁ + deflection distance D₂.

As indicated in Fig. 4B, curvature imparted in bending stage 210 may cause curvature of glass plate 300 in more than one direction or location on glass plate 300. For example, 4B illustrates a curved glass plate 400 in which bending stage 210 has caused curvature in both the X and Y directions. In other implementations, glass plate 300 may be bent or curved into other shapes, provided that the maximum deflection D₂ remains less than an initial thickness D₁ of glass plate 300. The curvature on outside surface 305 may be referred to as a bump or bumps, a hump, etc.

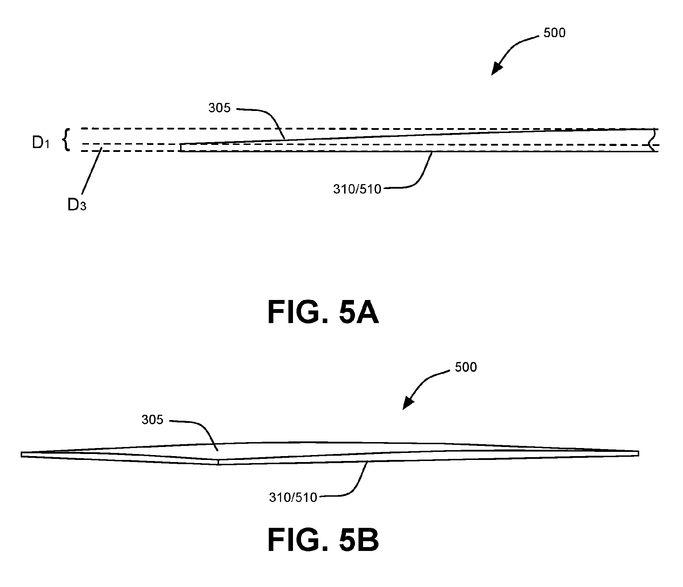

Following cooling of curved glass plate 400 in quenching stage 215, curved glass plate 400 may proceed to grinding stage 220. In grinding stage 220, an inside surface 310 of curved glass plate 400 may be ground substantially planar. Fig. 5A is schematic cross section diagram of a portion of curved glass plate 400 following grinding of inside surface 310 (hereinafter referred to as planar curved glass plate 500). Fig. 5B is an isometric diagram of the display glass of planar curved glass plate 500 following the grinding.

Consistent with implementations described herein, grinding stage 220 may be configured to grind inside surface 310 of curved glass plate 400 in a substantially planar manner until the total thickness of planar curved glass plate 500 is approximately equal to thickness D₁. In other words, the inside surface 310 of curved glass plate 400 may be ground until the maximum thickness of curved glass plate 500 approaches the original thickness of glass plate 300, prior to heating and bending. The ground inside surface 310 of planar curved glass plate 500 may be referred to as planar inside surface 510, as shown in Fig. 5A. Grinding in grinding stage 220 may be accomplished in any suitable manner, such as via wet grinding using a steel or diamond plated grinding wheel or belt, etc. The grinding causes portions of inside surface 310 of curved glass plate 400 to be removed in a planar manner, until the desired thickness D₁ is obtained. In some instances, a thickness less than D₁ may also be obtained, by continued grinding of planar inside surface 510. As shown in Fig. 5A, planar curved glass plate 500 may have a minimum thickness D₃ less than maximum thickness D₁. This differential represents the 3D shape formed in outer surface 305 of planar curved glass plate 500.

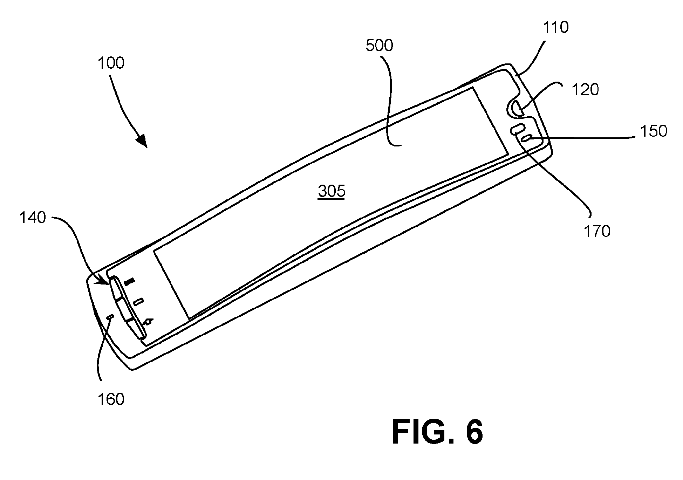

Following grinding in grinding stage 220, planar curved glass plate 500 may be advanced to polishing stage 225, where planar curved glass plate 500 is polished to a desired level of optical clarity. Polishing of planar curved glass plate 500 in polishing stage 225 may be performed in any suitable manner, such as using mechanical polishing mechanisms, polishing compounds, etc. As described below, following polishing in polishing stage 225, a touch screen assembly (not shown) may be attached to planar inside surface 510 of planar curved glass plate 500. The assembly touch screen display 130 may be installed into device 100. Fig. 6 is an isometric diagram of user device 100 showing curved outside surface 305 of outer display glass 135.

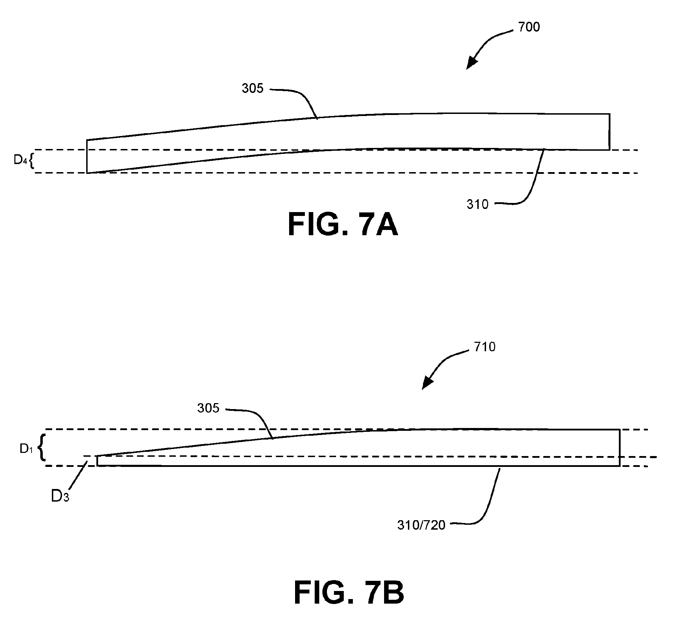

Fig. 7A is a schematic cross section diagram of glass plate 300 of Figs. 3A and 3B following the bending stage of Fig. 2 according to another exemplary implementation (referred to hereinafter as curved glass plate 700). As shown in Fig. 7A, an exemplary bend thickness of curved glass plate 700 is depicted as deflection distance D₄. That is, deflection distance D₄ represents the difference between a maximum deflection of the curved inside surface 310 of curved glass plate 700 and a minimum deflection of the curved inside surface 310. In the example depicted in Figs. 7A and 7B, the maximum deflection occurs in a region approximately positioned on one end of curved glass plate 700, thus creating a substantially ramp-like shape in outer surface 305.

Figs. 7B is a schematic cross section diagram of a planar curved glass plate 710 following grinding and polishing of curved glass plate 700 in the manner described above. As shown in Fig. 7B, inside surface 310 of planar curved glass plate 710 may be ground in a substantially planar manner until the total thickness of planar curved glass plate 710 is approximately equal to thickness D₁. The ground inside surface of planar curved glass plate 710 may be referred to as planar inside surface 720, as shown in Fig. 7B. The grinding causes portions of inside surface 310 of curved glass plate 700 (Fig. 7A) to be removed in a planar manner, until the desired thickness D₁ is obtained. As shown in Fig. 7B, planar curved glass plate 710 may have a minimum thickness D₃ less than maximum thickness D₁. This differential represents the 3D shape formed in outer surface 305 of planar curved glass plate 710.

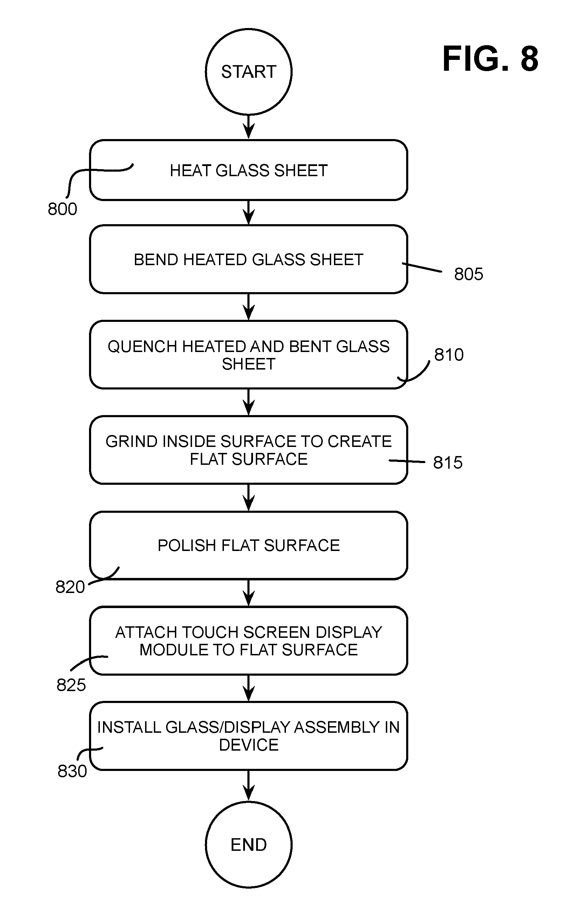

Fig. 8 is a flow diagram illustrating processing for creating the display glass of Fig 6 in a manner consistent with implementations described herein. Processing may begin with heating a substantially planar glass plate 300 corresponding in size to a desired outer display glass 135 (block 800). As described above, glass plate 300 may be heated to a working temperature in heating stage 205, such as via a heating furnace. Following heating, glass plate 300 may be bent to a desired outer surface configuration (block 805). For example, glass plate 300 may be conveyed or forwarded to bending stage 210, such as a vacuum mold bending station. As described above, any suitable shape may be formed in glass plate 300, provided that a maximum curve deflection (e.g., D₂) is less than the initial thickness (e.g., D₁) of glass plate 300.

Following bending in bending stage 210, curved glass plate 400 may be cooled or quenched (block 810). For example, curved glass plate 400 may be advanced to quenching stage 215 where curved glass plate 400 may be subjected to blown air or other cooling fluid, thereby reducing a temperature of curved glass plate 400 below the working temperature.

After quenching, a planar or flat surface may be formed in an inside surface of curved glass plate 400 (block 815). As described above, inside surface 310 of curved glass plate 400 may be ground (e.g., in grinding stage 220) until inside surface 310 is substantially planar. The planar inside surface may be referred to as planar inside surface 510 (as shown in Fig. 5A and 5B). In some implementations, grinding of inside surface 210 may be performed via a rotating grinding disc or other suitable grinding apparatus. Following grinding, inside surface 310 may be polished to remove grooves/scratches formed during grinding (block 820). For example, one or more polishing discs, compounds, etc. may be applied to inside surface 310.

Following polishing, one or more touch screen components (e.g., conductive ITO layers, etc.) may be adhered or attached to inside surface 310 (block 825). By grinding inside surface 310 of curved display glass 400 to a planar surface, the touch screen components may be securely and functionally secured to outer display glass 135 while maintaining a desirable curved outer surface 305. The assembled display 130 (e.g., including outer display glass 135 and the touch screen components or modules) may be installed within user device 100 (block 830).

### CONCLUSION

Implementations described herein provide a display in which an outer surface includes a 3D or non-planar configuration and an inside surface that includes a substantially planar configuration. More specifically, a sheet of outer display glass may be heated and bent to form a desired outside configuration. An inside surface of the bent glass sheet may then be ground to form a planar inside surface, thereby allowing secure adhesion of touch screen components to the inside surface.

The foregoing description of the embodiments described herein provides illustration and description, but is not intended to be exhaustive or to limit the invention to the precise form disclosed. Modifications and variations are possible in light of the above teachings or may be acquired from the practice of the invention.

For example, aspects have been described above with respect to detecting a handheld devices, such as mobile telephones, etc. In other implementations, display 130 may be provided in any suitable display device, such as a television, monitor, automotive display, etc. Further, while series of acts have been described with respect to Fig. 8, the order of the acts may be varied in other implementations consistent with the invention. Moreover, non-dependent acts may be performed in parallel.

It should be emphasized that the term "comprises/comprising" when used in this specification is taken to specify the presence of stated features, integers, steps, or components, but does not preclude the presence or addition of one or more other features, integers, steps, components, or groups thereof.

No element, act, or instruction used in the description of the present application should be construed as critical or essential to the invention unless explicitly described as such. Also, as used herein, the article "a" is intended to include one or more items. Further, the phrase "based on," as used herein is intended to mean "based, at least in part, on" unless explicitly stated otherwise.

The scope of the invention is defined by the claims and their equivalents.

## Claims

1. A method of manufacturing a touch screen display, comprising:
heating a substantially planar glass sheet to a working temperature;
bending the planar glass sheet into a non-planar configuration to include a curved inside surface and a curved outside surface;
grinding the curved inside surface to form a substantially planar inside surface; and
mounting a touch screen assembly to the substantially planar inside surface.

2. The method of claim 1, wherein the substantially planar glass sheet has an initial thickness and;
wherein bending the planar glass sheet comprises bending the planar glass sheet by a deflection distance less than the initial thickness.

3. The method of claim 2, wherein bending the planar glass sheet results in a curved glass sheet having a maximum height corresponding to the initial thickness plus the deflection distance.

4. The method of claim 3, wherein grinding the curved inside surface comprises grinding the curved inside surface until the maximum height of the curved glass sheet is less than or equal to the initial thickness.

5. The method of claim 1, wherein the grinding comprises wet grinding performed using a grinding wheel or belt.

6. The method of claim 1, further comprising:
cooling the bent glass sheet prior to grinding.

7. The method of claim 1, further comprising:
polishing the planar inside surface to a desired optical clarity.

8. The method of claim 1, wherein the non-planar configuration comprises a curve in a single dimension or a curve in two dimensions.

9. The method of claim 1, wherein the non-planar configuration comprises at least one raised portion relative to a remainder of the glass sheet.

10. The method of claim 1, wherein the bending is performed using a vacuum mold.

11. A method of forming a display glass, comprising:
bending a planar glass plate to a predetermined three dimensional (3D) configuration;
grinding the bent glass plate to include a planar inside surface;
polishing the ground glass plate to an optical clarity;
and attaching the polished glass plate to a touch screen assembly.

12. The method of claim 11, wherein the predetermined three dimensional (3D) configuration comprises a maximum deflection distance, and
wherein grinding the bent glass comprises grinding the planar glass plate by an amount approximately equal to the maximum deflection distance.

13. The method of claim 11, wherein the ground glass sheet has an overall thickness substantially equal to an initial thickness of the planar glass plate.

14. The method of claim 11, wherein the 3D configuration comprises at least one curve in at least one dimension.

15. The method of claim 11, wherein the grinding comprises wet grinding performed using a grinding wheel or belt.
